# EUROPÄISCHE PATENTSCHRIFT

(11) **EP 1 032 772 B1**
(45) Veröffentlichungstag und Bekanntmachung des Hinweises auf die Patenterteilung: **13.11.2002**
(21) Anmeldenummer: 98949875.3
(22) Anmeldetag: 11.08.1998
(51) Int. Cl.: F16D 65/16, F16D 59/02, F16D 55/02

(54) **MAGNETBREMSE UND ELEKTROMECHANISCHE BREMSVORRICHTUNG MIT EINER MAGNETBREMSE**
MAGNETIC BRAKE AND ELECTROMECHANICAL BRAKE DEVICE WITH A MAGNETIC BRAKE
FREIN ELECTROMAGNETIQUE ET SYSTEME DE FREINAGE ELECTROMECANIQUE MUNI D'UN FREIN ELECTROMAGNETIQUE

(30) Priorität: 27.11.1997 DE 19752543
(43) Veröffentlichungstag der Anmeldung: 06.09.2000
(73) Patentinhaber: ROBERT BOSCH GMBH, 70442 Stuttgart (DE)
(72) Erfinder: BOOZ, Othmar, D-71665 Vaihingen (DE); KÖPFF, Georg, D-71665 Vaihingen (DE)
(86) Internationale Anmeldenummer: DE9802302
(87) Internationale Veröffentlichungsnummer: WO99028648

(56) Entgegenhaltungen:
- EP-A- 0 488 809
- EP-A- 0 788 957
- DD-A- 138 701
- DE-A- 2 460 121
- DE-A- 4 128 037
- DE-A- 19 611 910
- DE-A- 19 617 796
- DE-B- 1 133 525
- US-A- 3 400 797
- US-A- 3 704 766
- US-A- 4 760 895

## Beschreibung

Die Erfindung betrifft eine elektromechanische Bremsvorrichtung nach dem Oberbegriff des Anspruchs 1.

Bei einer aus EP-A-0 788 957 bekannten, für ein Kraftfahrzeug bestimmten elektromechanischen Bremsvorrichtung dieser Art ist eine Magnetbremse vorgesehen, welche bestromt eine Betätigungseinrichtung der Bremsvorrichtung freigibt, unbestromt dagegen durch Federkraft an der Betätigungsvorrichtung angreift und die elektromechanische Bremsvorrichtung festsetzt. Das Kraftfahrzeug weist an allen seinen Rädern eine derartige Bremsvorrichtung auf. Jeweils zwei an einer Fahrzeugachse angeordnete Bremsvorrichtungen sind an eine Stromversorgung angeschlossen. Bei dieser bekannten Ausführungsform ist nachteilig, daß bei einem Ausfall des Elektromagneten der Magnetbremse die betätigte und festgesetzte Bremsvorrichtung nicht mehr lösbar ist, bei Ausfall der Stromversorgung sogar die Bremsvorrichtungen einer Achse blockiert sind. Das Fahrzeug kann somit aus eigener Kraft nicht in eine Werkstatt bewegt werden.

Aus US-A 5 185 542 ist eine Magnetbremse bekannt, welche ein drehbares und ein drehfestes Teil aufweist, die in einer Bremsstellung der Magnetbremse in reibschlüssiger oder formschlüssiger Verbindung miteinander stehen, so daß das drehbare Teil vom drehfesten Teil gehalten oder zumindest gebremst wird, und die in einer gelösten Stellung der Magnetbremse frei voneinander sind, so daß das drehbare Teil frei drehbar ist. Zur Betatigung weist die bekannte Magnetbremse ein Federelement auf, das das drehfeste Teil oder das drehbare Teil gegen das jeweils andere Teil drückt, sowie einen Elektromagneten, der durch Bestromen das drehbare Teil und das drehfeste Teil gegen die Kraft des Federelements voneinander trennt, das heißt das Federelement bringt und halt die Magnetbremse in ihrer Bremsstellung, wobei die Magnetbremse mittels des Elektromagneten lösbar ist. Ebenso ist es möglich, eine Magnetbremse durch Bestromen des Elektromagneten in die Bremsstellung zu bringen, wogegen ein Federelement die Magnetbremse löst. Die Magnetbremse hat den Nachteil, daß sie im Fehlerfall, das heißt bei Ausfall ihres Elektromagneten oder seiner Stromversorgung nicht betätigbar ist.

Ferner ist aus DE-A 24 60 121 eine Magnetbremse mit zwei magnetischen Kreisen bekannt, welche jeweils einen Elektromagneten und einen Permanentmagneten aufweisen. Jedem Magnetkreis ist ein Anker zugeordnet und beide Anker sind mechanisch gekoppelt. Die Magnetbremse ist durch gleichzeitige kurzzeitige Bestromung ihrer beiden Elektromagneten unter Schwächung beziehungsweise Verstärkung des Feldes des zugeordneten Permanentmagneten in zwei stabile Stellungen, einer Lüft- und einer Bremsstellung, umschaltbar. In der Bremsstellung ist die Magnetbremse von einer Andrückfeder unterstützt. Auch bei dieser Magnetbremse ist die Funktionsfähigkeit bei Ausfall eines Elektromagneten oder der Stromversorgung eingeschränkt.

### Vorteile der Erfindung

Die erfindungsgemäße elektromechanische Radbremsvorrichtung mit den Merkmalen des Anspruchs 1 ist insofern vorteilhaft, als sie eine Magnetbremse aufweist, die wahlweise mit ihrem ersten oder mit ihrem zweiten Elektromagneten betätigbar ist, da die beiden Elektromagneten redundant sind. Dies hat den Vorteil einer hohen Betriebssicherheit der Magnetbremse und damit der Radbremsvorrichtung. Dabei sind die beiden Elektromagneten an jeweils eigene, voneinander unabhängige Stromversorgungen angeschlossen, so daß auch im Bereich der Stromversorgung zur Betätigung der Magnetbremse Redundanz besteht, was eine Ausfallwahrscheinlichkeit der Magnetbremse weiter herabsetzt. Die Magnetbremse dient dazu, die elektromechanische Bremsvorrichtung in betätigter Stellung festzusetzen, so daß eine mit der Bremsvorrichtung erzeugte Bremskraft konstant gehalten wird, ohne daß die elektromechanische Bremsvorrichtung bestromt wird. Eine Bestromung der elektromechanischen Bremsvorrichtung ist lediglich zum Erzeugen oder Vergrößern der Bremskraft und/oder zum Verringern der Bremskraft, worunter auch ein vollständiges Lösen der elektromechanischen Bremsvorrichtung verstanden wird, notwendig. Die elektromechanische Bremsvorrichtung läßt sich dadurch als Feststellbremse verwenden, die eine einmal aufgebrachte Bremskraft ohne Bestromung aufrecht erhält. Desweiteren läßt sich die elektromechanische Bremsvorrichtung auch während einer Bremsung mit konstanter Bremskraft mit der Magnetbremse festsetzen, so daß die Bremskraft ohne Bestromung der Bremsvorrichtung aufrechterhalten wird. Nur zum Ändern der Bremskraft wird die Magnetbremse in ihre gelöste Stellung geschaltet und die Bremsvorrichtung so bestromt, daß sich ihre Bremskraft im gewünschten Sinn verändert.

In bevorzugter Ausgestaltung der elektromechanischen Radbremsvorrichtung ist die Magnetbremse bistabil ausgebildet, das heißt sie verbleibt sowohl in der gelösten Stellung als auch in der Bremsstellung ohne Bestromung ihrer Elektromagneten. Die Elektromagneten dienen dazu, die Magnetbremse von der gelösten Stellung in die Bremsstellung und umgekehrt von der Bremsstellung in die gelöste Stellung umzuschalten. Zum Umschalten zwischen den beiden Stellungen ist jeweils nur ein kurzzeitiges Bestromen wahlweise des ersten oder des zweiten Elektromagneten notwendig. Die bistabile Ausbildung der Magnetbremse kann beispielsweise mit Hilfe eines Permanentmagneten erfolgen, der die Magnetbremse gegen die Kraft eines Federelements in einer ihrer beiden Stellungen hält, wogegen das Federelement die Magnetbremse nach Umschalten mittels eines ihrer beiden Elektromagneten gegen die Kraft des Permanentmagneten in der anderen Stellung hält, wobei die Kraft des Permanentmagneten in dieser anderen Stellung der Magnetbremse durch einen durch das Umschalten bewirkten Luftspalt in ihrem magnetischen Kreis geschwächt ist.

In weiterer bevorzugter Ausgestaltung ist die elektromechanische Bremsvorrichtung mit einem selbsthemmungsfreien Spindeltrieb ausgebildet, das heißt sie löst sich bei unbestromtem Elektromotor und gelöster Magnetbremse aufgrund einer Reaktionskraft zur Andruckkraft, mit der ihre Reibbremsbeläge gegen einen Bremskörper, beispielsweise eine Bremsscheibe oder eine Bremstrommel, gedrückt werden, bis auf eine vernachlässigbare Restbremskraft. Diese Ausgestaltung der Erfindung hat den Vorteil, daß die elektromechanische Bremsvorrichtung auch bei Ausfall ihres Elektromotors oder seiner Stromversorgung durch die Redundanz der Magnetbremse in jedem Fall lösbar ist. Es erübrigt sich daher, einen zweiten Elektromotor zum Lösen der elektromechanischen Bremsvorrichtung im Fehlerfall vorzusehen. Der Aufwand, um die elektromechanische Bremsvorrichtung auch im Fehlerfall lösen zu können, ist minimal: er beschränkt sich auf das Vorsehen eines zweiten Elektromagneten für die Magnetbremse und voneinander unabhängige Stromversorgungen für die beiden Elektromagneten.

### Zeichnung

Die Erfindung wird nachfolgend anhand eines in der Zeichnung dargestellten Ausführungsbeispiels näher erläutert. Es zeigen:
- Figur 1: einen Achsschnitt einer erfindungsgemäßen Magnetbremse,
und
- Figur 2: einen Achsschnitt einer erfindungsgemäßen, elektromechanischen Bremsvorrichtung.

Die beiden Figuren sind der Klarheit wegen schematisierte Darstellungen von Ausführungsbeispielen der Erfindung, sie weisen unterschiedliche Maßstäbe auf.

### Beschreibung der Ausführungsbeispiele

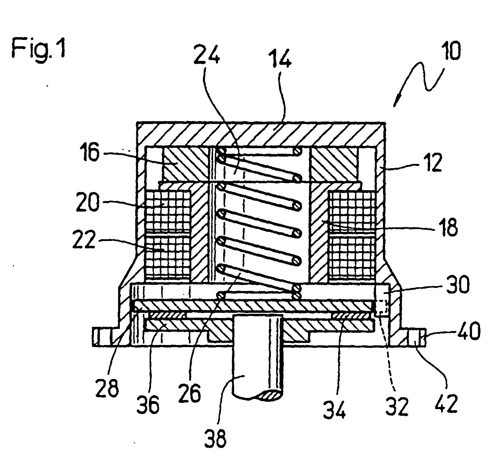

Die in Figur 1 dargestellte, erfindungsgemäße Magnetbremse 10 weist ein topfförmiges Gehäuse 12 aus ferromagnetischem Material auf. An einem Boden 14 des Gehäuses 12 ist ein ringförmiger Permanentmagnet 16 mit axialer Magnetisierung konzentrisch im Gehäuse 12 angebracht. In Fortsetzung des Permanentmagneten 16 ist ein hohlzylindrischer Magnetkern 18 aus ferromagnetischen Material konzentrisch zum Gehäuse 12 am Permanentmagneten 16 angebracht. Auf den Magnetkern 18 sind zwei ringförmige Magnetspulen 20, 22 einander axial benachbart aufgeschoben. Die Magnetspulen 20, 22 befinden sich in einem ringförmigen Zwischenraum zwischen dem Magnetkern 18 und dem Gehäuse 12. Jede Magnetspule 20, 22 bildet zusammen mit dem Magnetkern 18 einen Elektromagneten 18, 20; 18, 22. In einen zylindrischen Innenraum 24 innerhalb des hohlzylindrischen Magnetkerns 18 und des ringförmigen Permanentmagneten 16 ist eine Schraubendruckfeder 26 als Federelement eingesetzt, die sich gegen den Boden 16 des Gehäuses 12 abstützt und die gegen eine Ankerscheibe 28 drückt, die auf einer dem Boden 14 abgewandten Seite des Permanentmagneten 16 und der beiden Elektromagneten 18, 20; 18, 22 im Gehäuse 12 der Magnetbremse 10 angeordnet ist. Die Ankerscheibe 28 ist mittels vorzugsweise mehrerer über den Umfang des Gehäuses 12 verteilt angeordneter, in Gehäuselängsrichtung verlaufender, mit dem Gehäuse 12 einstückiger Federn 30, die im Gehäuse 12 nach innen abstehen und die in komplementäre Nuten 32 im Umfangsrand der Ankerscheibe 28 eingreifen, drehfest und axialverschieblich mit dem Gehäuse 12 verbunden. Von den Federn 30 und Nuten 32 ist in der Zeichnung lediglich ein Paar zu sehen.

Auf einer dem Permanentmagneten 16 und den beiden Elektromagneten 18, 20; 18, 22 abgewandten Stirnfläche der Ankerscheibe 28 ist ein ringscheibenförmiger Bremsbelag 34 fest angebracht. Auf der Seite des Bremsbelags 34 ist eine Kupplungsscheibe 36 im Gehäuse 12 auf dessen dem Boden 14 abgewandter, offener Stirnseite angeordnet. Die Kupplungsscheibe 36 ist beispielsweise auf eine mit dem Gehäuse 12 koaxiale Welle 38 eines in Figur 1 nicht dargestellten Elektromotors aufgepreßt und auf diese Weise drehbar im Gehäuse 12 des Elektromagneten 10 angeordnet.

Die Funktion der erfindungsgemäßen Magnetbremse 10 ist folgende: Die Magnetbremse 10 weist zwei stabile Stellungen, nämlich die in Figur 1 dargestellte Bremsstellung sowie eine nicht dargestellte, gelöste Stellung auf, bei der die Ankerscheibe 28 an einer ihr zugewandten Stirnseite der beiden Elektromagneten 18, 20; 18, 22 anliegt. Die Magnetbremse 10 ist also bistabil ausgebildet. In der dargestellten Bremsstellung drückt die Schraubendruckfeder 26 die im Zwischenraum zwischen der Kupplungsscheibe 36 und den beiden Elektromagneten 18, 20; 18, 22 axial bewegliche Ankerscheibe 28 mit ihrem Bremsbelag 34 gegen die Kupplungsscheibe 36. Anker- und Kupplungsscheibe 28, 36 sind durch die Andruckkraft der Schraubendruckfeder 26 aufgrund Reibschlusses drehfest miteinander verbunden, d. h. die im Gehäuse 12 drehfeste Ankerscheibe 28 hält die Kupplungsscheibe 36 drehfest im Gehäuse 12. Da in der Bremsstellung ein axialer Luftspalt zwischen dem Magnetkern 18 und der Ankerscheibe 28 besteht, der ein vom Permanentmagneten 16 über den Magnetkern 18 auf die Ankerscheibe 28 wirkendes Magnetfeld schwächt, ist die Kraft der Schraubendruckfeder 26 größer als die vom Permanentmagneten 16 auf die Ankerscheibe 28 ausgeübte Magnetkraft, d. h. die Schraubendruckfeder 26 drückt die Ankerscheibe 28 gegen die Magnetkraft des Permanentmagneten 16 gegen die Kupplungsscheibe 36.

Zum Umschalten der Magnetbremse 10 in die gelöste Stellung wird eine der beiden Magnetspulen 20, 22 so bestromt, daß sie das Magnetfeld des Permanentmagneten 16 verstärkt, und zwar so stark, daß die Magnetkraft größer als die Kraft der Schraubendruckfeder 26 ist, so daß die Ankerscheibe 28 gegen die Kraft der Schraubendruckfeder 24 gegen den Magnetkern 18 gezogen wird. Der Bremsbelag 34 ist dadurch von der Kupplungsscheibe 36 abgehoben, die Kupplungsscheibe 36 ist frei drehbar. Nach dem Umschalten in die gelöste Stellung wird der Strom durch die Magnetspule 20, 22 wieder abgeschaltet. Da die Ankerscheibe 28 in der gelösten Stellung der Magnetbremse 10 unmittelbar an der Stirnseite des Magnetkerns 18 anliegt, so daß kein Luftspalt mehr besteht, reicht die vom Permanentmagneten 16 über den Magnetkern 18 ausgeübte Magnetkraft aus, die Ankerscheibe 28 gegen die Kraft der Schraubendruckfeder 26 in Anlage am Magnetkern 18 zu halten. Die Magnetbremse 10 verbleibt also auch unbestromt in ihrer gelösten Stellung. Der Magnetkreis wird vom Magnetkern 18 über die in gelöster Stellung der Magnetbremse 10 an ihm anliegende Ankerscheibe 28 und das Gehäuse 12 geschlossen.

Um die Magnetbremse 10 wieder in die Bremsstellung umzuschalten, wird eine der beiden Magnetspulen 20, 22 bestromt, und zwar nun in entgegengesetztem Sinn, so daß das von der bestromten Magnetspule 20, 22 erzeugte Magnetfeld dem Magnetfeld des Permanentmagneten 16 entgegengerichtet ist. Auf diese Weise wird das Magnetfeld geschwächt, und zwar so stark geschwächt, daß die Schraubendruckfeder 26 die Ankerscheibe 28 vom Permanentmagneten 16 und den beiden Elektromagneten 18, 20; 18, 22 abdrückt und mit ihrem Bremsbelag 34 gegen die Kupplungsscheibe 36 drückt, womit sich die Magnetbremse 10 wieder in der Bremsstellung befindet. Die Magnetbremse 10 läßt sich also durch einen kurzen Stromimpuls durch eine ihrer beiden Magnetspulen 20, 22 von der Bremsstellung in die gelöste Stellung und durch einen Stromimpuls entgegengesetzter Polung wieder von der gelösten in die Bremsstellung umschalten. Sowohl in der Bremsstellung als auch in der gelösten Stellung hält die Magnetbremse 10 unbestromt.

Die beiden Magnetspulen 20, 22 sind an in der Zeichnung nicht dargestellte, voneinander unabhängige Stromversorgungen angeschlossen. Bei Ausfall eines ihrer beiden Elektromagneten 18, 20; 18, 22 oder einer der beiden voneinander unabhängigen Stromversorgungen für die Elektromagneten 18, 20; 18, 22 läßt sich die Magnetbremse 10 also immer noch umschalten, sie weist infolge dessen eine hohe Betriebssicherheit auf.

Das Gehäuse 12 weist an seiner offenen Stirnseite einen mit dem Gehäuse 12 einstückigen Schraubenflansch 40 mit Schraubenlöchern 42 auf, mit dem die Magnetbremse 10 beispielsweise an einem in Figur 1 nicht dargestellten Elektromotor oder an einem sonstigen Gerät mit einer zeitweise festzusetzenden Welle 38 anflanschbar ist.

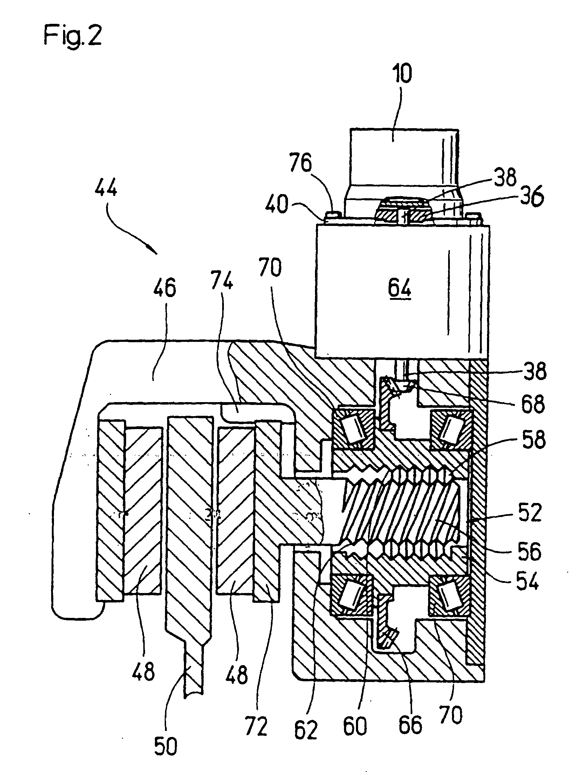

Figur 2 zeigt eine erfindungsgemäße, elektromechanische Radbremsvorrichtung 44, die als Scheibenbremse ausgebildet und die mit der in Figur 1 dargestellten, und vorstehend erläuterten Magnetbremse 10 festsetzbar ist. Die Radbremsvorrichtung 44 weist einen Schwimmsattel 46 auf, in dem ein Paar Reibbremsbeläge 48 beiderseits einer zwischen ihnen in Rotation versetzbaren Bremsscheibe 50 angebracht sind.

Zum Andrücken eines der beiden Reibbremsbeläge 48 an die Bremsscheibe 50 weist die erfindungsgemäße Radbremsvorrichtung 44 einen in ihren Schwimmsattel 46 eingebauten Spindeltrieb 52 auf. Wegen der Reibungsarmut und eines hohen Wirkungsgrades ist der Spindeltrieb 52 als Wälzgewindetrieb in Form eines Rollengewindetriebs ausgebildet. Er weist eine in einer Spindelmutter 54 koaxial einliegende Gewindespindel 56 und acht Profilrollen 58 auf, die in einem Zwischenraum zwischen Spindelmutter 54 und Gewindespindel 56 angeordnet sind. Die Profilrollen 58 weisen eine umlaufende Profilierung auf, die komplementär zu einem Profil eines Mutterngewindes 60 der Spindelmutter 54 und zu einem mit dem Gewindeprofil des Mutterngewindes 60 übereinstimmenden Gewindeprofil 62 der Gewindespindel 56 komplementäre Form aufweist. Die umlaufende Profilierung der Profilrollen 58 hat keine Steigung. Es ist allerdings auch möglich, die Profilrollen 58 abweichend vom dargestellten Ausführungsbeispiel mit einer Profilierung mit Steigung, also mit einem Gewinde auszubilden (nicht dargestellt). Die Profilrollen 58 stehen mit ihrer Profilierung in Eingriff sowohl mit dem Muttemgewinde 60 als auch mit dem Spindelgewinde 62. Durch rotierenden Antrieb der Spindelmutter 54 werden die Profilrollen 58 zu einer umlaufenden Bewegung um die Gewindespindel 56 herum wie Planetenräder eines Planetengetriebes angetrieben. Während ihrer Umlaufbewegung rollen die Profilrollen 58 auf dem Spindelgewinde 62 ab, sie führen während der Umlaufbewegung um die Gewindespindel 56 herum eine Rotationsbewegung um ihre eigene Achse aus. Über die umlaufenden Profilrollen 58 bewirkt ein rotierender Antrieb der Spindelmutter 54 eine translatorische Bewegung der Gewindespindel 56 in axialer Richtung.

Der Spindeltrieb 52 ist selbsthemmungsfrei ausgebildet, d. h. eine Gewindesteigung des Spindelgewindes 62 und des Muttemgewindes 60 sind so groß gewählt, daß eine in axialer Richtung auf die Gewindespindel 56 wirkende Kraft die Spindelmutter 54 in Drehung versetzt und die Gewindespindel 56 in axialer Richtung verschiebt.

Die Spindelmutter 54 ist mit einem Paar Axial-Schrägrollenlagern 70 drehbar im Schwimmsattel 46 gelagert und stützt sich über die Schrägrollenlager 70 axial am Schwimmsattel 46 ab.

Zum rotierenden Antrieb der Spindelmutter 54 weist die erfindungsgemäße Radbremsvorrichtung 44 einen Elektromotor 64 auf, der rechtwinklig zum Spindeltrieb 52 am Schwimmsattel 46 angeflanscht ist. Der Elektromotor 64 treibt die Spindelmutter 64 über ein Kegelzahnradbetriebe 66, 68 an, das ein auf die Spindelmutter 54 drehfest aufgepreßtes Tellerzahnrad 66 aufweist, mit dem ein Kegelzahnrad 68 kämmt, das drehfest auf eine Welle 38 des Elektromotors 64 aufgepreßt ist. Der Elektromotor 64 ist als elektronisch kommutierbarer Motor ausgebildet.

Die Gewindespindel 56 ist einstückig mit einer Bremsbelagplatte 72, die an einem der Bremsscheibe 50 zugewandten Stirnende der Gewindespindel 56 ausgebildet ist. Die Bremsbelagplatte 72 weist eine in der Zeichnung nicht sichtbare Nut auf, in die eine mit dem Schwimmsattel 46 einstückige Feder 74 eingreift. Auf diese Weise ist die Gewindespindel 56 verdrehsicher im Schwimmsattel 46 gehalten. Einer der beiden Reibbremsbeläge 48 ist fest auf der Bremsbelagplatte 72 der Gewindespindel 56 angebracht. Der andere Reibungsbelag 48 liegt in an sich bekannter Weise im Schwimmsattel 46 ein.

Die Magnetbremse 10 ist auf einer dem Spindeltrieb 52 abgewandten Stirnseite am Elektromotor 64 angebracht. Sie ist mittels durch ihren Schraubenflansch 40 durchgesteckter Schrauben 76 mit dem Elektromotor 64 verschraubt. Die Welle 38 des Elektromotors 64 steht auf beiden Seiten aus dem Elektromotor 64 vor. Auf einer dem Schwimmsattel 46 abgewandten Seite des Elektromotors 64 ist die Kupplungsscheibe 36 der Magnetbremse 10 auf die Welle 38 des Elektromotors 64 drehfest aufgepreßt.

Die Funktion der erfindungsgemäßen Radbremsvorrichtung 44 ist folgende: Zum Betätigen wird die Spindelmutter 54 mit dem Elektromotor 64 rotierend in einer Betätigungsdrehrichtung angetrieben, so daß die Gewindespindel 56 translatorisch axial in Richtung der Bremsscheibe 50 verschoben wird. Die Feder 74 des Schwimmsattels 46 verhindert eine Rotation der Gewindespindel 56. Die Gewindespindel 56 drückt den an ihrer Bremsbelagplatte 72 angebrachten Reibbremsbelag 48 gegen eine Seite der Bremsscheibe 50. Über eine Reaktionskraft wird der zweite Radbremsbelag 48 über den Schwimmsattel 46 in an sich bekannter Weise an die andere Seite der Bremsscheibe 50 gedrückt. Die Bremsscheibe 50 wird gebremst, wobei eine Bremskraft bzw. ein Bremsmoment dem mit dem Elektromotor 64 aufgebrachten Antriebsmoment proportional ist.

Zum Lösen der Radbremsvorrichtung 44 oder zum Verringern der Bremskraft wird die Spindelmutter 54 in entgegengesetzter Rückstelldrehrichtung angetrieben, wodurch die Gewindespindel 56 translatorisch von der Bremsscheibe 50 wegbewegt wird. Der an ihrer Bremsbelagplatte 72 angebrachte Reibbremsbelag wird von der Bremsscheibe 50 abgehoben. Die Gewindespindel 56 wird soweit rückgestellt, daß ein unabhängig von einer Abnutzung der Reibbremsbeläge 48 gleichbleibender Spalt zwischen den Rreibbremsbelägen 48 und der Bremsscheibe 50 bei nicht betätigter Radbremsvorrichtung 44 besteht, das sog. "Lüftspiel" der erfindungsgemäßen Radbremsvorrichtung 44 bleibt konstant.

Die Magnetbremse 10 befindet sich während des Betätigens und des Lösens der Radbremsvorrichtung 44 in ihrer gelösten Stellung, so daß die Welle 38 des Elektromotors 64 frei drehbar ist. Bei Verwendung der Radbremsvorrichtung 44 als Feststellbremse wird die Radbremsvorrichtung 44 betätigt, so daß die Bremsscheibe 50 drehfest zwischen den Reibbremsbelägen 48 gehalten ist. Anschließend wird die Magnetbremse 10 durch Bestromen eines ihrer beiden Elektromagnete 18, 20; 18, 22 in ihre Bremsstellung umgeschaltet und auf diese Weise die Welle 38 des Elektromotors 64 blockiert, wodurch die Radbremsvorrichtung 44 festgesetzt und die einmal aufgebrachte Bremskraft bei unbestromtem Elektromotor 64 und unbestromter Magnetbremse 10 aufrechterhalten bleibt.

Auch wenn bei Verwendung der Radbremsvorrichtung 44 als Betriebsbremse eine auf die Bremsscheibe 50 ausgeübte Bremskraft vorübergehend konstant gehalten wird, kann dies dadurch erfolgen, daß nach Aufbringen der Bremskraft mit dem Elektromotor 64 die Magnetbremse 10 in ihre Bremsstellung umgeschaltet wird, wozu lediglich ein kurzer Stromimpuls auf einen ihrer beiden Elektromagnete 18, 20; 18, 22 notwendig ist. Die Bremskraft wird dadurch ohne Bestromen des Elektromotors 64 und ohne Bestromen der Magnetbremse 10 konstant gehalten. Zum Ändern der Bremskraft wird die Magnetbremse 10 in ihre gelöste Stellung umgeschaltet. Auf diese Weise wird der Elektromotor 64 nur zum Ändern der Bremskraft, insbesondere zum Erhöhen der Bremskraft bestromt. Dies spart zum einen Energie und entlastet ein Bordnetz eines mit der Radbremsvorrichtung 44 bremsbaren Fahrzeugs. Des weiteren wird eine Erwärmung des Elektromotors 64 verringert, da dieser nur zum Ändern der Bremskraft bestromt wird, beim Konstanthalten der Bremskraft jedoch stromlos ist. Es wird also auch der Elektromotor 64 geringer belastet, so daß ein weniger leistungsstarker und damit kleinerer und leichterer Elektromotor 64 verwendet werden kann.

Im Fehlerfall, d. h. bei Ausfall einer Steuerelektronik des Elektromotors 64, seiner Stromversorgung oder des Elektromotors 64 selbst wird die Magnetbremse 10 in ihre gelöste Stellung geschaltet, so daß die Welle 38 des Elektromotors 64 frei drehbar ist. Dadurch ist auch die Gewindemutter 54 frei drehbar. Die Gewindespindel 56 wird von dem an die Bremsscheibe 50 angedrückten Reibbremsbelag 48 in axialer Richtung von der Bremsscheibe 50 weggedrückt und setzt, da der Spindeltrieb 52 selbsthemmungsfrei ist, die Spindelmuter 54 in Rotation. Die Radbremsvorrichtung 44 wird gelöst bis die Andruckkraft der Reibbremsbeläge 48 an die Bremsscheibe 50 so gering ist, daß sich die Gewindespindel 56 aufgrund innerer Reibung des Spindeltriebs 52, des Kegelzahnradgetriebes 66, 68 und des Elektromotors 64 nicht weiterbewegt. Die Reibbremsbeläge 48 liegen mit vernachlässigbarer Restkraft an der Bremsscheibe 50 an, die so gering ist, daß die Bremsscheibe 50 nahezu frei drehbar ist und ein mit der Radbremsvorrichtung 10 ausgerüstetes Kraftfahrzeug gefahren werden kann, ohne daß es zu einer Überhitzung der Radbremsvorrichtung 44 kommt. Die Magnetbremse 10 kann selbstverständlich auch an anderer Stelle der Radbremsvorrichtung 44 angeordnet sein und beispielsweise die Spindelmutter 54 unmittelbar lösbar festsetzen (nicht dargestellt).

## Patentansprüche

1. Elektromechanische Radbremsvorrichtung (44) für ein Kraftfahrzeug, mit einem Elektromotor (64), mit einer selbsthemmungsfreien Betätigungseinrichtung (52, 66, 68), die von dem Elektromotor (64) antreibbar ist und die eine rotierende Antriebsbewegung des Elektromotors (64) in eine translatorische Bewegung umsetzt, mit einem Reibbremsbelag (48), der durch Antrieb der Betätigungseinrichtung (52, 66, 68) mittels des Elektromotors (64) von der Betätigungseinrichtung (52, 66, 68) an einen drehfest mit einem Fahrzeugrad verbundenen Bremskörper (50) andrückbar ist, und mit einer Magnetbremse (10), die einen ersten Elektromagneten (18, 20) zu ihrer Betätigung aufweist, wobei mit der Magnetbremse (10) der Elektromotor (64) und/oder die Betätigungseinrichtung (52, 66, 68) in ihrer jeweiligen Stellung festsetzbar ist, **dadurch gekennzeichnet, daß** die Magnetbremse (10) einen zweiten Elektromagneten (18, 22) zu ihrer vom ersten Elektromagneten (18, 20) unabhängigen Betätigung aufweist, wobei die beiden Elektromagneten (18, 20; 18, 22) an voneinander unabhängige Stromversorgungen angeschlossen sind.

2. Elektromechanische Bremsvorrichtung nach Anspruch 1, **dadurch gekennzeichnet, daß** die Magnetbremse (10) bistabil ausgebildet ist.

3. Elektromechanische Radbremsvorrichtung nach Anspruch 1, **dadurch gekennzeichnet, daß** die Betätigungseinrichtung (52, 66, 68) einen selbsthemmungsfreien Spindeltrieb (52) aufweist.

4. Elektromechanische Radbremsvorrichtung nach Anspruch 3, **dadurch gekennzeichnet, daß** der Spindeltrieb (52) als Wälzgewindetrieb, insbesondere als Rollengewindetrieb ausgebildet ist.

## Claims

1. Electromechanical wheel-braking apparatus (44) for a motor vehicle, with an electric motor (64), with a self-locking-free actuating device (52, 66, 68) which is capable of being driven by the electric motor (64) and which converts a rotating drive movement of the electric motor (64) into a translational movement, with a friction-brake lining (48) which, by the actuating device (52, 66, 68) being driven by means of the electric motor (64), is capable of being pressed by the actuating device (52, 66, 68) onto a brake body (50) connected fixedly in terms of rotation to a vehicle wheel, and with a magnetic brake (10) which has a first electromagnet (18, 20) for its actuation, the electric motor (64) and/or the actuating device (52, 66, 68) being capable of being fixed in its respective position by means of the magnetic brake (10), **characterized in that** the magnetic brake (10) has a second electromagnet (18, 22) for its actuation independent of the first electromagnet (18, 20), the two electromagnets (18, 20; 18, 22) being connected to power supplies independent of one another.

2. Electromechanical braking apparatus according to Claim 1, **characterized in that** the magnetic brake (10) is of bistable design.

3. Electromechanical wheel-braking apparatus according to Claim 1, **characterized in that** the actuating device (52, 66, 68) has a self-locking-free spindle mechanism (52).

4. Electromechanical wheel-braking apparatus according to Claim 3, **characterized in that** the spindle mechanism (52) is designed as a rolling-thread mechanism, in particular as a roller-thread mechanism.

## Revendications

1. Dispositif électromécanique (44) de freinage de roues, pour un véhicule automobile, comprenant :
- un moteur électrique (64),
- un dispositif d'actionnement (52, 66, 68) réversible, qui peut être entraîné par le moteur électrique (64) en transformant l'entraînement rotatif du moteur (64) en un mouvement de translation,
- une garniture de frein à friction (48) que l'entraînement assuré par le moteur électrique (64) du dispositif d'entraînement (52, 66, 68) applique en pression sur un corps de frein (50) solidaire d'une roue du véhicule, et
- un frein magnétique (10) comportant, pour son actionnement, un premier électroaimant (18, 20), le moteur électrique (64) et/ou le dispositif d'actionnement (52, 66, 68) pouvant être fixés dans leurs positions respectives,
**caractérisé en ce que**
le frein magnétique (10) comporte un second électroaimant (18, 22) permettant de l'actionner indépendamment du premier électroaimant (18, 20), les deux électroaimants (18, 20 ; 18. 22) étant raccordés à des alimentations électriques indépendantes l'une de l'autre.

2. Dispositif électromécanique de freinage de roue selon la revendication 1,
**caractérisé en ce que**
le frein magnétique (10) est bistable.

3. Dispositif électromécanique de freinage de roue selon la revendication 1,
**caractérisé en ce que**
le dispositif d'actionnement (52, 66, 68) présente un entraînement à broche filetée (52) réversible.

4. Dispositif électromécanique de freinage de roue selon la revendication 3,
**caractérisé en ce que**
l'entraînement à broche filetée (52) est du type à galets, en particulier rouleaux.
